# EUROPÄISCHE PATENTANMELDUNG

(11) **EP 0 823 567 A1**
(43) Veröffentlichungstag der Anmeldung: **11.02.1998**
(21) Anmeldenummer: 96112794.1
(22) Anmeldetag: 08.08.1996
(51) Int. Cl.: F16F 1/44, F16F 1/371, F16F 3/093, F16F 3/12

(54) **Vorgefertigtes elastisches Lager zur statischen und dynamischen Lagerung von Bauteilen, Maschinen oder Anlagen**

(71) Anmelder: INTEC AACHEN INNOVATIVE TECHNOLOGIEN FÜR DIE BAUSANIERUNG, Dr. Honsinger & Dr. Breitbach, 52068 Aachen (DE)
(72) Erfinder: Honsinger, Detlef, Dr., 52134 Herzogenrath (DE); Breitbach, Manfred, Dr., 52134 Herzogenrath (DE)
(74) Vertreter: König, Werner, Dipl.-Ing.

(57) **Zusammenfassung**

Es wird ein vorgefertigtes elastisches Lager (1) zu statischen und dynamischen Lagerung von Bauteilen, Maschinen oder Anlagen vorgestellt, welches in wirtschaftlicher und einfacher Weise die Einleitung höherer Auflagerkräfte als bei bisher bekannten Lagern in das Lager selbst zuläßt und gleichzeitig die Beanspruchung der angrenzenden Druckflächen hinsichtlich der maximalen Pressung und der Quer- und Spaltzugbeanspruchung durch die Erzielung einer kubischen, gleichmäßigen Druckspannungsverteilung deutlich reduziert. In besonderen Anwendungsfällen des Betonbaus kann bei Anwendung der Erfindung auf eine besondere Lagerkopfbewehrung verzichtet werden, wodurch neue Konstruktionsprinzipien im Bauwesen ermöglicht werden.

Zu diesem Zweek weist das vorgeschlagene Lager (1) konkave parabolische Vertiefungen (2) an beiden Druckflächen (2,2) auf. Abhängig von den Anforderungen an die Lagereigenschaften werden in der Erfindung weitere Maßnahmen beschrieben, wie die kubische, gleichmäßige Druckspannungsverteilung erzielt werden kann.

## Beschreibung

Die vorliegende Erfindung betrifft ein vorgefertigtes elastisches Lager zur statischen und dynamischen Lagerung von Bauteilen, Maschinen oder Anlagen, mit einem zwei gegenüberliegende Druckflächen aufweisenden Lagerelement, aus Polymeren, das zur Krafteinleitung und Kraftaufnahme jeweils mit einer ebenen Fläche zusammenarbeitet.

Für Lagerungen im Maschinenbau, Anlagenbau und dem Bauwesen werden seit über 25 Jahren zunehmend elastische Werkstoffe, wie z.B. Elastomere, thermoplastische Elastomere oder Duromere verwendet. Gründe hierzu sind u.a. die dreidimensionale elastische Verformbarkeit und das Dämpfungsvermögen solcher Werkstoffe. Für viele Anwendungsfälle ist bedeutsam, daß bei Verwendung von elastischen Lagerungen Kantenpressungen vermieden werden.

Für die Lagerungen können reine Polymerelemente verwendet werden. Abhängig von den angestrebten Lagereigenschaften kann z.B. zur Erhöhung der zulässigen Vertikallasten oder zur Begrenzung der horizontalen Lagerausbreitung eine Bewehrung, z.B. in Form von Stahlblechen, faserverstärkten Kunststoffen, Geweben oder eine Füllung mit Füllstoffen oder Fasern, vorteilhaft wirken. Durch Wahl des Polymertyps (z.B. NR, CR, EPDM), des Aufbaus (z.B. Dicke, Anzahl der Polymerschichten, Bewehrung) und der Gestaltung der Lagergeometrie (z.B. runde, quadratische oder rechteckige Lagergrundrisse) können Lagerelemente hergestellt werden. In bestimmten Fällen ist es günstig, die seitlichen Polymerflächen etwa durch konkave oder konvexe Formgebung zu profilieren, um im beanspruchten Zustand der Lager die maximalen Randdehnungen der Polymere zu minimieren.

Es ist bekannt, daß sich unter elastischen Lagerungen eine räumliche, in grober Näherung parabelförmige Druckspannungsverteilung unter Druckbelastung ausbildet. Hierunter werden allgemein auch Funktionen verstanden, die mathematisch exakt als Gaußsche Glockenkurve, Hyperbel etc. angesprochen werden müßten. Die Druckspannungsverteilung in Betonbauteilen, wie z.B. Stützen, Konsolen, Unterzügen oder Bindern, ist aus experimentellen Untersuchungen für Lager im Bauwesen bekannt. Das Verhältnis σₘₐₓ/σₘ liegt für bauübliche Lager und Lagergeometrien zwischen etwa 2 und 5. Aus der horizontalen Lagerausbreitung ergeben sich rechnerisch maximale Randschubspannungen, die für bauübliche Lager Werte bis zu etwa 20 N/mm² erreichen. Zu der Spannungsverteilung unter elastischen Lagerungen wurden für vereinfachte Annahmen theoretische Lösungen veröffentlicht, die die praktischen Verhältnisse hinreichend beschreiben.

Infolge der Lasteinleitungsgeometrie (Lagerfläche), der parabelförmigen Druckspannungsverteilung, der Exzentrizitäten, der Schiefwinkeligkeit und der horizontalen Lagerausbreitung etc. liegt im Lagerbereich für die angrenzenden Bauteile eine Störung der Kraftweiterleitung vor. Aus experimentellen Untersuchungen sind die Spannungen und Dehnungen in Beton und Bewehrung bekannt. Für die Praxis liegen Bemessungsregeln für die erforderlichen Bauteilausbildungen (Querschnitte, Bewehrungsquerschnitte, Bewehrungsführung) zur sicheren Übertragung von Lasten vor.

In einem diskreten Störbereich treten z.B. in den Betonbauteilen
- Spaltzugkräfte Zₛ in der x- und der y-Achse.
- Randzugkräfte Z_{R} an den Seitenflächen und neben den freien Lagerflächen,
- Querzugkräfte Z_{Q} in den Randbereichen der Lager infolge der Randschubspannungen des Lagers
auf.

Die Größenordnung der resultierenden Kräfte im Störbereich einer Lagerlasteinleitung kann, bezogen auf die vertikale Last F_{Z}, wie folgt quantifiziert werden:
- - Spaltzugkräte Zₛ =: 0,2 bis 0,3 F_{z}
- - Randzugkräfte Z_{R} =: 0,01 bis 0,02 F_{z}
- - Randzugkräfte Z_{Q} =: 0,005 bis 0,075 F_{z}.

Die Größe der Spaltzugkräfte ist abhängig von der Druckspanuungsverteilung unterhalb des elastischen Lagers (Verhältnis σₘₐₓ/σₘ). Die erforderliche Spaltzugkraft beträgt für eine bauübliche Lagergeometrie für:
- - σₘₐₓ/σₘ = 5: Zₛ = 0,2 F_{z}
- - σₘₐₓ/σₘ = 1: Zₛ = 0 F_{z.}

Mit zunehmendem Auflagerdrehwinkel nehmen aufgrund der günstigeren Lastumleitungen im Bauteil (Spannungsumlenkung über Ersatzprisma) die erforderlichen Bewehrungsgrade für Spaltzug und Querzug progressiv ab. Die erforderliche Spaltzugkraft beträgt für eine bauübliche Lagerverdrehung α für z.B.:
- - α =25 ‰: Zₛ = 0,05 F_{z}
- - α = 1 ‰: Zₛ = 0,2 F_{z}.

Die erforderliche Querzugkraft beträgt für eine bauübliche Lagerverdrehung für z.B.:
- - α = 25 ‰: Z_{Q} = 0,02 F_{z}
- - α = 1 ‰: Z_{Q} = 0,05 F_{z}.

Aus diesen Zusammenhängen geht hervor, daß die Verwendung herkömmlicher elastischer Lager durch die Interaktion der Lagermechanik und der Bauteilbeanspruchungen für angrenzende Bauteile zu aufwendigen Bewehrungsführungen und vergleichsweise großen Mindestbauteilgeometrien führt. Darüber hinaus wird für herkömmliche unbewehrte elastische Lager die Beanspruchbarkeit der Lagerelemente (mittlere rechnerische Pressung, zulässige Lagerverdrehung aus Bauteilabweichungen und Bauwerksverformung) durch die
- horizontale Ausbreitung des Polymerwerkstoffs unter Druckbeanspruchung,
- große innere Dehnung der Polymerketten und -segmente infolge der horizontalen Ausbreitung,
- dadurch geringere elastische Verformbarkeit infolge der horizontalen Ausdehnung und der Materialverstreckung unter Druckbeanspruchung,
- dadurch geringere Dämpfung unter Druckbeanspruchung
deutlich begrenzt.

Es ist daher die Aufgabe der vorliegenden Erfindung, ein neuartiges Lager mit höherer zulässiger mittlerer rechnerischer Pressung, geringerer horizontaler Ausbreitung und höherer Elastizität zu schaffen,
- das eine wirtschaftlichere Ausnutzung der bestehenden Bemessungskonzepte und Bauweisen, z.B. im Betonbau, durch eine höhere Beanspruchbarkeit der Lagerungspunkte (Lasten, Verschiebungen, Verdrehungen),
- eine Weiterentwicklung von Bauteilen im Fertigteilbau und von Herstellungs- und Konstruktionsprinzipien ermöglicht und
- das die wirtschaftliche Ausnutzung deutlich kleinerer Bauteilquerschnitte durch neuere Entwicklungen zu hochfesten, meist spröderen Werkstoffen (Stähle, faserverstärkte Kunststoffe, Polymerbeton, hochfester Beton, faserbewehrter Beton) gestattet.

Zur Lösung dieser Aufgabe wird erfindungsgemäß bei einem Lager der eingangs erwähnten Art vorgeschlagen, daß beide Druckflächen des Lagerelements eine konkave, im wesentlichen parabolisch oder polyedrisch geformte Vertiefung aufweisen.

Das Polymerelement kann einen quadratischen, rechteckigen, runden, regelmäßigen oder unregelmäßigen Grundriß aufweisen.

Das so ausgebildete Lager nimmt, bezogen auf das Lagervolumen, die höchstmöglichen Auflagekräfte auf, weil eine gleichmäßige Druckspannungsverteilung auf beide Druckflächen erreicht wird. Das Lager ist deshalb besonders für den Beton- und Fertigteilbau geeignet.

Auch nach der CH-PS 502 532, die ein gegen Schwingungen isolierendes Stützelement betrifft, soll eine möglichst gleichmäßige Druckspannungsverteilung erreicht werden. Dabei kann die untere Fläche des Lagerelements konkav ausgebildet sein. Ein Lastübertragungsteil soll das Lagerelement durch seine eberfalls konkave Ausbildung auf dessen Oberseite vollständig formschlüssig bedecken, d.h. es soll auf der ganzen oberen Fläche eine gleichmäßige Kraft in das Lagerelement eingeleitet werden. Nur auf der unteren Seite des Lagerelements soll eine gleichmäßige Druckspannung erreicht werden (Spalte 4, Zeilen 25-29).

Die vorliegende Erfindung geht dagegen davon aus, daß das Lagerelement auf beiden Seiten konkav ausgebildet ist, so daß das Lastübertragungsteil bereits eine sich zur Mitte des Lagerelements hin verringernde Kraft in das Lagerelement einleitet. Die Steuerung der Druckspannungsverteilung erfolgt somit nicht allein über die Steuerung der relativen Druckdefomation (d/h), sondern bereits über die verschieden hohe Verteilung der Auflagerkraft entlang des Durchmessers des Lagerelements.

Mit der erfindungsgemäßen Maßnahme wird der Einfluß des sich zur Mitte hin ändernden Formfaktors kompensiert.

Bei dem erfindungsgemäßen Lagerelement nimmt dessen Dicke nach außen hin zu, während das bekannte Lagerelement zum Mittelpunkt dicker wird. Somit liegen völlig andere Druckverteilungsprinzipien beim erfindungsgemäßen Lager und dem bekannten Stützelement vor.

Vorteilhafte Ausgestaltungen der Erfindung sind Gegenstand der Unteransprüche.

Das erfindungsgemäße Lager kann so ausgebildet sein, daß die Vertiefung durch auf der jeweiligen Druckfläche angeordnete Profilelemente gebildet ist, deren Profilhöhe zum Mittelpunkt des Lagerelements hin abnimmt.

Das erfindungsgemäße Lager kann so ausgebildet sein, daß die Profilelemente konzentrisch angeordnet sind. Die Profilelemente können verschiedene Querschnitte haben und z.B. als Kreisabschnitte, Trapeze oder Dreiecke ausgebildet sein. Es können auch punktuelle Profilierungen in Form von Erhebungen, wie z.B. zylindrische oder sphärische Noppen, verwendet werden. Es kann auch sinnvoll sein, die Scheitellinien der Profilelemente parallel zu den Kanten des Polymerelements bis in dessen Lagerecken verlaufen zu lassen.

Das erfindungsgemäße Lager kann so ausgebildet sein, daß das Lagerelement mit einer oder mehreren Bewehrungslagen versehen ist.

Das erfindungsgemäße Lager kann so ausgebildet sein, daß die Bewehrung aus Stahlblech besteht.

Das erfindungsgemäße Lager kann so ausgebildet sein, daß die Bewehrung aus Gewebematten besteht.

Das erfindungsgemäße Lager kann so ausgebildet sein, daß die Gewebematten aus einem Stahlgeflecht bestehen.

Das erfindungsgemäße Lager kann so ausgebildet sein, daß die Gewebematten aus einem Kunststoffgeflecht bestehen.

Das erfindungsgemäße Lager kann so ausgebildet sein, daß das Lagerelement aus mindestens zwei polymere Materialien unterschiedlicher Härte so zusammengesetzt ist, daß die Härte des Lagerelements zu seinem Mittelpunkt hin abnimmt.

Das erfindungsgemäße Lager kann so ausgebildet sein, daß das Lagerelement eine zentrische kreisförmige Durchbrechung aufweist, die mit einem Material ausgefüllt ist, dessen Härte geringer ist, als die, des die Durchbrechung umgebenden Lagerelements.

Das erfindungsgemäße Lager kann so ausgebildet sein, daß das Lagerelement mehrere über die Lagerfläche verteilte Bohrungen aufweist, die von den Außenkanten zum Mittelpunkt des Lagerelements mit zunehmend weicheren Materialien als dasjenige des Lagerelements gefüllt sind.

Das erfindungsgemäße Lager kann so ausgebildet sein, daß das Lagerelement in mindestens einer Ebene horizontale, zu den Druckflächen parallele Öffnungen aufweist, die von den Außenkanten zum Mittelpunkt des Lagerelements mit zunehmend weicheren Materialien als dasjenige des Lagerelements gefüllt sind.

Schließlich kann das erfindungsgemäße Lager so ausgebildet sein, daß die Öffnungen in zwei Ebenen angeordnet sind, wobei die Längsachsen der Öffnungen in der einen Ebene orthogonal zu den Längsachsen der Öffnungen in der anderen Ebene angeordnet sind.

Einige bevorzugte Ausführungsformen der Erfindung werden anschließend anhand von Zeichnungen beschrieben. Es zeigt:
Fig. 1 eine Seitenansicht einer ersten Ausführungsform des erfindungsgemäßen Lagers mit konkaver Parabol-Profilierung,
Fig. 2 eine Draufsicht auf das Lager nach Fig. 1,
Fig. 3 eine Seitenansicht einer weiteren Ausführungsform mit Bewehrung,
Fig. 4 eine Draufsicht auf die Ausführungsform nach Fig. 3,
Fig. 5 einen Schnitt durch eine weitere Ausführungsform des erfindungsgemäßen Lagers mit konzentrischen Profilierungen, deren Scheitellinien ein Paraboloid beschreiben,
Fig. 6 eine Draufsicht auf die Ausführungsform gem. Fig. 5,
Fig. 7 eine weitere Ausführungsform, bei der lediglich die Randbereiche profiliert sind,
Fig. 8 eine Draufsicht auf die Ausführungsform gem. Fig. 7,
Fig. 9 ein Schnitt durch eine weitere Ausführungsform des Lagers, das mittig gelocht ist und hier ein Polymerelement geringerer Werkstoffhärte aufnimmt,
Fig. 10 eine Draufsicht auf die Ausführungsform gem. Fig. 9,
Fig. 11 einen Schnitt durch eine weitere Ausführungsform des erfindungsgemäßen Lagers, bei der Löcher vorgesehen sind, die mit elastischen Materialien gefüllt sind,
Fig. 12 eine Draufsicht auf das Lager gem. Fig. 11,
Fig. 13 eine Seitenansicht auf eine Ausführungsform des erfindungsgemäßen Lagers, bei der in zwei übereinanderliegenden Ebenen Lochungen vorgesehen sind, welche mit Füllungen versehen sind, und
Fig. 14 einen Schnitt nach der Linie 14-14 in Fig. 13.

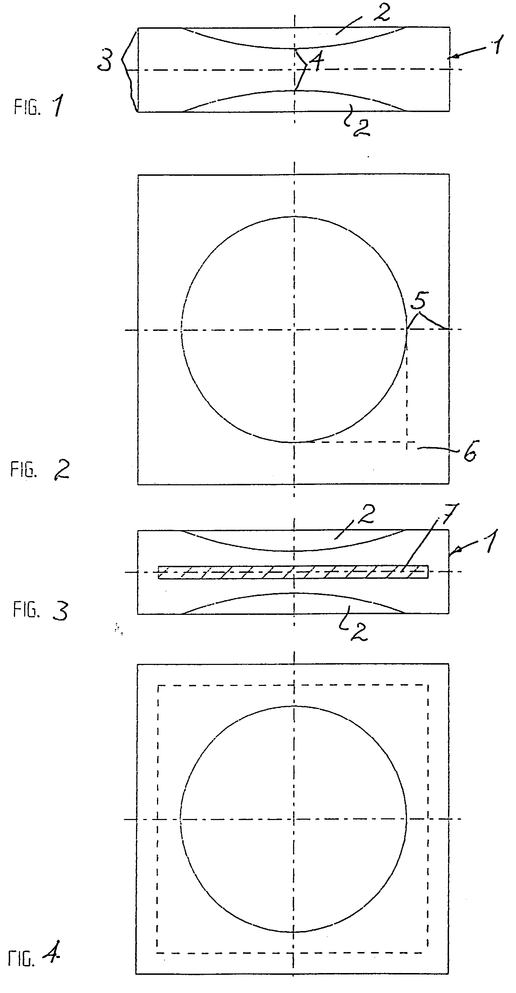

In Fig. 1,2 ist eine Ausführungsform des erfindungsgemäßen Lagers dargestellt. Das Lager besteht im wesentlichen aus einem Polymerelement 1 mit parallelen Druckflächen. Das Polymerelement 1 kann einen quadratischen, rechteckigen, runden, regelmäßigen oder unregelmäßigen Grundriß aufweisen. In beiden Druckflächen sind konkave Vertiefungen 2 ausgebildet. Die Randdicke 3 des Polymerelements 1 im unbelasteten Zustand, die Zentrumsdicke 4 des Polymerelements 1 im unbelasteten Zustand sowie die Randabstände 5 des konkaven Vertiefungsvolumens von den Kanten des Polymerelements 1 und die Funktion des Vertiefungsvolumens sind von der Geometrie und Beanspruchung des Lagers abhängig und auf experimentellem Wege zu bestimmen. Es kann auch sinnvoll sein, die Begrenzungslinie der konkaven Vertiefungsfläche parallel der Kanten des Polymerelementes 1 bis in die Lagerecken 6 auszuführen.

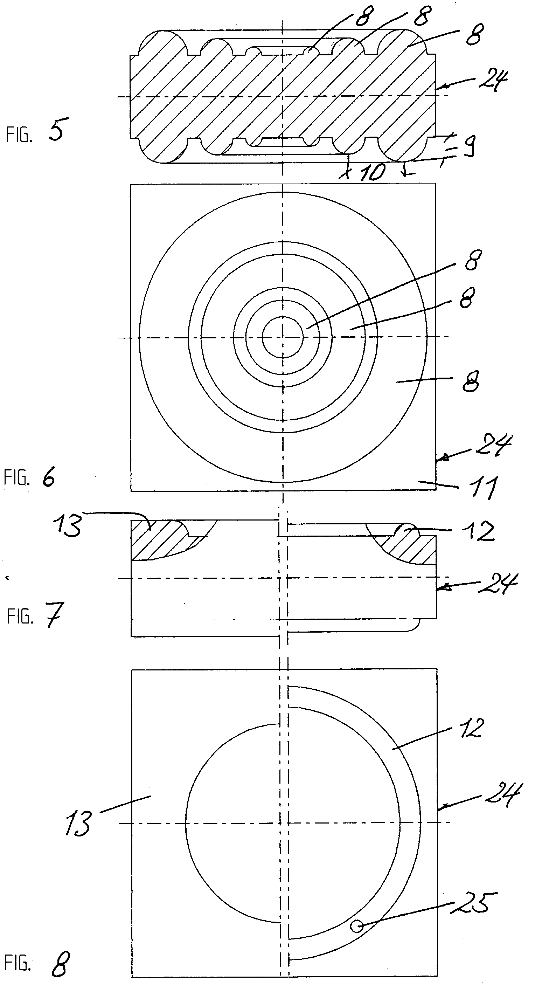

Je nach Anwendungsfall kann es sinnvoll sein, das beschriebene Polymerelement 1 durch Bewehrungen 7 zu verstärken, wie in der Ausführungsform gem. Fig. 3,4 dargestellt ist. Es können eine oder mehrere Bewehrungslagen angeordnet werden. Als Bewehrung 7 können Stahlbleche unterschiedlicher Werkstoffspezifikation oder Gewebematten aus Stahl oder Kunststoff verwendet werden.

In Fig. 5,6 ist eine weitere Ausführungsform des erfindungsgemäßen Lagers dargestellt, bei dem auf einem Polymerelement 24 mit parallelen Druckflächen Profilierungen 8 angeordnet sind. Das Polymerelement 24 kann einen quadratischen, rechteckigen, runden oder unregelmäßigen Grundriß aufweisen. Die Profilierungen 8 können als konzentrische Erhebungen mit verschiedenen Querschnitten, wie z.B. Kreisabschnitte, Trapeze oder Dreiecke, ausgebildet sein. Es können auch punktuelle Profilierungen in Form von Erhebungen, wie z.B. zylindrische oder sphärische Noppen, verwendet werden. Die Scheitelpunkte der Profilierungen ergeben eine stetige konkave Vertiefung. Die Scheitelhöhen 9, Scheitelabstände 10 und Abmessungen der Profilierungen 8 sind von der Geometrie und Beanspruchung des Lagers abhängig und sind auf experimentellem Wege zu bestimmen. Es kann auch sinnvoll sein, die Scheitellinien der Profilierung 8 parallel der Kanten des Polymerelements 24 bis in die Lagerecken 11 auszuführen.

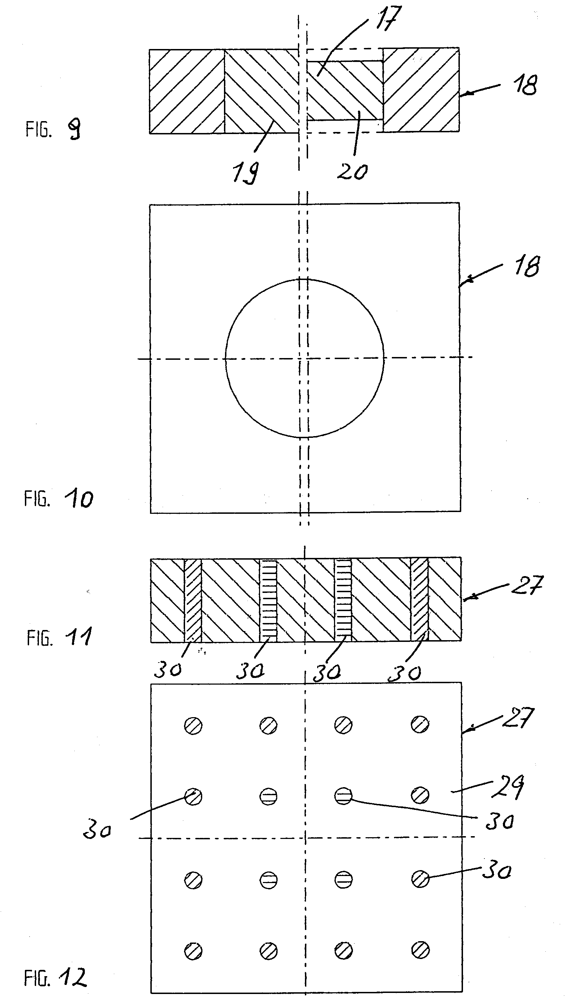

In Fig. 7,8 sind drei weitere Ausführungsformen des erfindungsgemäßen Lagers dargestellt, wobei lediglich die Randbereiche der Druckflächen des Polymerelements gem. Fig. 5,6 profiliert sind. Es kann eine Profilierung als ringförmige Erhebung 12, als punktuelle Erhebung 25 oder als flächige Erhöhung 13 sinnvoll sein.

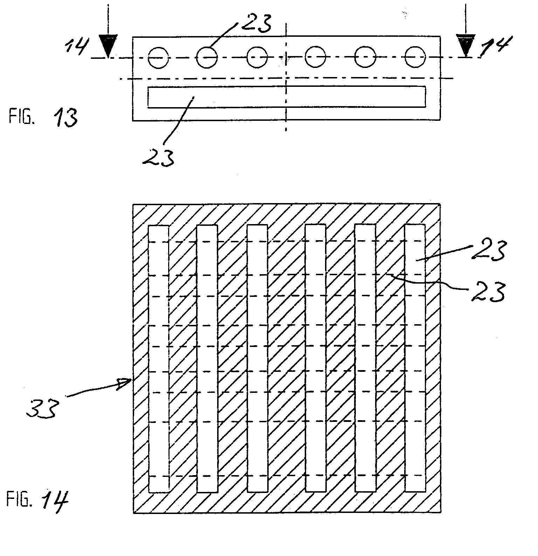

Fig. 9,10 zeigen eine Form der Anwendung der Erfindung, bei der in einem unbewehrten oder bewehrten Lager 18 ein Loch vorgesehen ist, welches mit einem elastischen Material 17 gefüllt wird, das eine geringere Werkstollhärte als das Polymerelement 18 selbst aufweist. Das Loch kann bündig mit den Druckflächen des Lagers 18 (Fig. 9, links, Abschnitt 19) oder mit einer vertieften Profilierung (Fig. 9, rechts, Abschnitt 20) geschlossen werden.

Fig. 11, 12 zeigen eine Ausführungsform der Erfindung, bei der in einem unbewehrten oder bewehrten Lager 27 punktuelle Löcher 30 vorgesehen werden, welche mit einem elastischen Material gefüllt werden, das eine geringere Werkstoffhärte als das Polymerelement 29 selbst aufweist. Die Löcher 30 können bündig mit den Druckflächen des Polymerelements 29 oder mit einer vertieften Profilierung geschlossen werden. Vorteilhaft ist es, die dem Zentrum des Lagers 27 benachbarten Löcher mit einem sehr weichen Material zu füllen und die Werkstoffhärte der Füllungen zu den Lagerrändern hin zu steigern.

Fig. 13,14 zeigen eine Ausführungsform der Erfindung, bei der in einem unbewehrten Lager horizontale Lochungen 23 vorgesehen sind, welche mit einem elastischen Material gefüllt sind, das eine geringere Werkstoffhärte als das Polymerelement selbst aufweist. Vorteilhaft ist es, im Zentrum des Lagers 33 die Löcher mit einem sehr weichen Material zu füllen und zu den Lagerrändern hin Füllungen größere Werkstoffhärte zu verwenden. Weiterhin ist es günstig, die Lochungen 23 in zwei Ebenen anzuordnen, um eine räumliche Beeinflussung der Spannungsverteilung zu erzielen.

Die anhand der vorstehenden Ausführungsformen beschriebene Erfindung löst die eingangs gestellte Aufgabe in einfacher und wirtschaftlicher Weise.

Darüber hinaus werden die brandschutztechnischen Auflagen betreffend die Ausführung von Bauteilen gem. DIN 4102 - Brandverhalten von Baustoffen - erfüllt.

### Bezugszeichenliste

- 1: Polymerlement
- 2: Vertiefung
- 3: Randdicke
- 4: Zentrumsdicke
- 5: Randabstand
- 6: Lagerecke
- 7: Bewehrung
- 8: Profilierung
- 9: Scheitelhöhe
- 10: Scheitelabstand
- 11: Lagerecke
- 12: ringförmige Erhebung
- 13: flächige Erhöhung
- 17: elastischen Material
- 18: Lager
- 19: Abschnitt
- 20: Abschnitt
- 23: Lochung
- 25: punktuelle Erhebung
- 27: Lager
- 29: Polymerelement
- 30: punktuelle Löcher
- 33: Lager

## Patentansprüche

1. Vorgefertigtes elastisches Lager zur statischen und dynamischen Lagerung von Bauteilen, Maschinen oder Anlagen, mit einem zwei gegenüberliegende Druckflächen anfweisenden Lagerelement aus Polymeren, das zur Krafteinleitung und Kraftaufnahme jeweils mit einer ebenen Fläche zusammenarbeitet, **dadurch gekennzeichnet**, daß beide Druckflächen des Lagerelements (1) eine konkave, im wesentlichen parabolisch oder polyedrisch geformte Vertiefung (2) aufweisen.

2. Vorgefertigtes elastisches Lager nach Anspruch 1, dadurch gekennzeichnet, daß die Vertiefung (2) durch auf der jeweiligen Druckfläche angeordnete Profilelemente (8) gebildet ist, deren Profilhöhe zum Mittelpunkt des Lagerelements (1) hin abnimmt.

3. Vorgefertigtes elastisches Lager nach einem der vorhergehenden Ansprüche, dadurch gekennzeichnet, daß die Profilelemente (8) konzentrisch angeordnet sind.

4. Vorgefertigtes elastisches Lager nach einem der vorhergehenden Ansprüche, dadurch gekennzeichnet, daß das Lagerelement (1) mit einer oder mehreren Bewehrungslagen (7) versehen ist.

5. Vorgefertigtes elastisches Lager nach Anspruch 4, dadurch gekennzeichnet, daß die Bewehrung (7) aus Stahlblech besteht.

6. Vorgefertigtes elastisches Lager nach Anspruch 4, dadurch gekennzeichnet, daß die Bewehrung (7) aus Gewebematten besteht.

7. Vorgefertigtes elastisches Lager nach Anspruch 6, dadurch gekennzeichnet, daß die Gewebematten aus einem Stahlgeflecht bestehen.

8. Vorgefertigtes elastisches Lager nach Anspruch 6, dadurch gekennzeichnet, daß die Gewebematten aus einem Kunststoffgeflecht bestehen.

9. Vorgefertigtes elastisches Lager zur statischen und dynamischen Lagerung von Bauteilen, Maschinen oder Anlagen, mit einem zwei gegenüberliegende Druckflächen aufweisenden Lagerelement aus Polymeren, bei dem die Krafteinleitung und Kraftaufnahme jeweils durch eine ebene Fläche erfolgt, **dadurch gekennzeichnet**, daß das Lagerelement (18;27) aus mindestens zwei polymere Materialien unterschiedlicher Härte so zusammengesetzt ist, daß die Härte des Lagerelements (18;27) zu seinem Mittelpunkt hin abnimmt.

10. Vorgefertigtes elastisches Lager nach Anspruch 9, dadurch gekennzeichnet, daß das Lagerelement (18) eine zentrische kreisförmige Durchbrechung aufweist, die mit einem Material ausgefüllt ist, dessen Härte geringer ist, als die, des die Durchbrechung umgebenden Lagerelements.

11. Vorgefertigtes elastisches Lager nach den Ansprüchen 9 oder 10, dadurch gekennzeichnet, daß das Lagerelement (27) mehrere über die Lagerfläche verteilte Bohrungen (30) aufweist, die von den Außenkanten zum Mittelpunkt des Lagerelements (27) mit zunehmend weicheren Materialien als dasjenige des Lagerelements (27) gefüllt sind.

12. Vorgefertigtes elastisches Lager nach einem der Ansprüche 9 bis 11, dadurch gekennzeichnet, daß das Lagerelement (33) in mindestens einer Ebene horizontale, zu den Druckflächen parallele Öffnungen (23) aufweist, die von den Außenkanten zum Mittelpunkt des Lagerelements (33) mit zunehmend weicheren Materialien als dasjenige des Lagerelements (33) gefüllt sind.

13. Vorgefertigtes elastisches Lager nach Anspruch 12, dadurch gekennzeichnet, daß die Öffnungen (31;32) in zwei Ebenen angeordnet sind, wobei die Längsachsen der Öffnungen in der einen Ebene (31) orthogonal zu den Längsachsen der Öffnungen in der anderen Ebene (32) angeordnet sind.
